## Europäisches Patentamt

## European Patent Office

## Office européen des brevets

(19)

(11) Veröffentlichungsnummer: **0 088 945**
**B1**

(12) # EUROPÄISCHE PATENTSCHRIFT

(45) Veröffentlichungstag der Patentschrift:
10.07.85

(51) Int. Cl.⁴: **G 21 C 7/10**

(21) Anmeldenummer: **83102039.1**

(22) Anmeldetag: **02.03.83**

(54) Verfahren zum Ent- und Beladen eines Kernreaktors und Steuerelement insbesondere für dieses Verfahren.

(30) Priorität: **16.03.82 DE 3209538**

(43) Veröffentlichungstag der Anmeldung:
**21.09.83 Patentblatt 83/38**

(45) Bekanntmachung des Hinweises auf die Patenterteilung:
**10.07.85 Patentblatt 85/28**

(84) Benannte Vertragsstaaten:
**AT CH DE IT LI NL SE**

(56) Entgegenhaltungen:
**BE - A - 664 640**
**FR - A - 1 435 216**
**FR - A - 2 189 817**

(73) Patentinhaber: **KRAFTWERK UNION AKTIENGESELLSCHAFT, Wiesenstrasse 35, D-4330 Mülheim (Ruhr) (DE)**

(72) Erfinder: **Garzarolli, Friedrich, Böhmerwaldstrasse 12, D-8552 Höchstadt (DE)**
Erfinder: **Stehle, Heinz, Dr., Schulstrasse 2, D-8521 Marloffstein (DE)**

(74) Vertreter: **Mehl, Ernst, Dipl.-Ing. et al, Postfach 22 01 76, D-8000 München 22 (DE)**

## Beschreibung

Die Erfindung betrifft ein Verfahren zum Ent- und Beladen eines Kernreaktors, bei dem ein einen Trägerkörper mit einem langgestreckten Neutronenabsorberkörper aufweisendes bestrahltes Steuerelement aus dem Kernreaktor entladen und anschließend ein zum Beladen bestimmtes Steuerelement wieder in den Kernreaktor eingesetzt wird, sowie ein Steuerelement insbesondere für dieses Verfahren.

Im Neutronenabsorberkörper von Steuerelementen ist Neutronengift wie z. B. Borkarbid $B_4C$ enthalten, welches in der Lage ist, in verstärktem Umfang thermische Neutronen zu absorbieren. Die Neutronenabsorberkörper der Steuerelemente werden daher zunächst ganz oder verhältnismäßig tief in den Kernreaktor eingefahren, um die dort am Anfang eines jeden Betriebszyklus vorhandene Überschußreaktivität zu kompensieren. Während des Betriebes des Kernreaktors nimmt diese Überschußreaktivität auf Grund des Abbrandes des Kernbrennstoffes in den Kernreaktorbrennelementen allmählich ab. Dies hat zur Folge, daß die Neutronenabsorberkörper der Steuerelemente während des Betriebszyklus des Kernreaktors allmählich immer mehr aus dem Kernreaktor herausgezogen werden.

Die vom Neutronengift der Neutronenabsorberkörper der Steuerelemente absorbierten thermischen Neutronen rufen Kernumwandlungen im Neutronengift hervor. Diese Kernumwandlungen führen zu Produktkernen, wie z. B. Tritium, die zwar radioaktiv sind, aber in der Regel nicht mehr als Neutronengift für thermische Neutronen wirken. Das Neutronengift in den Neutronenabsorberkörpern von Steuerelementen in Kernreaktoren unterliegen also einem Ausbrand, der zu in den Neutronenabsorberkörpern verbleibenden, häufig radioaktiven Kernreaktionsprodukten führt. Da die in den Neutronenabsorberkörpern enthaltenen Kernreaktionsprodukte in der Regel kein Neutronengift für thermische Neutronen sind, müssen die bestrahlten Steuerelemente mit ihren Neutronenabsorberkörpern nach einer gewissen Standzeit aus in Betrieb befindlichen Kernreaktoren entladen werden, da das Neutronengift allmählich aufgebraucht ist und die Neutronenabsorberkörper der bestrahlten Steuerelemente nicht mehr eine vorgegebene Mindestabsorptionswirkung für thermische Neutronen haben. An Stelle dieser entladenen bestrahlten Steuerelemente mit den aufgebrauchten Neutronenabsorberkörpern werden die Kernreaktoren wieder mit frischen unbestrahlten Steuerelementen beladen, deren Neutronenabsorberkörper unbestrahltes Neutronengift enthalten.

Die aus Kernreaktoren entladenen, aufgebrauchten und bestrahlten Steuerelemente müssen entsorgt werden. Da es sich bei diesen aufgebrauchten Steuerelementen und ihren Neutronenabsorberkörpern um sehr große Bauteile handelt und insbesondere wegen des Tritiuminventars, welches in den Neutronenabsorberkörpern durch Absorption thermischer Neutronen aus dem Neutronengift entstanden ist, ist die Entsorgung dieser aufgebrauchten und entladenen bestrahlten Steuerelemente mit ganz besonders hohem Kostenaufwand verbunden.

Der Erfindung liegt daher die Aufgabe zugrunde, den Anfall an zu entsorgenden bestrahlten Steuerelementen mit aufgebrauchten Neutronenabsorberkörpern zu verringern.

Zur Lösung dieser Aufgabe ist ein Verfahren der eingangs erwähnten Art erfindungsgemäß dadurch gekennzeichnet, daß ein betrahlter Neutronenabsorberkörper, der aus einem in einem Bezugskernreaktor bestrahlten Steuerelement stammt, verglichen mit seiner Ausgangsposition in diesem Bezugskernreaktor in eine um 180° um eine Querachse geschwenkte Position und/oder in eine um eine Längsachse gedrehte Position und/oder in eine bezüglich dem Trägerkörper dieses bestrahlten Steuerelementes aus dem Bezugskernreaktor andere Stelle im zum Beladen bestimmten Steuerelement gebracht und an dessen Trägerkörper angeordnet wird und daß dieses zum Beladen bestimmte Steuerelement derart in den Kernreaktor eingesetzt wird, daß sich dort der Neutronenabsorberkörper in der gegenüber seiner Ausgangsposition im Bezugskernreaktor um die Querachse geschwenkten Position bzw. um die Längsachse gedrehten Position bzw. bezüglich dem Trägerkörper des bestrahlten Steuerelementes aus dem Bezugskernreaktor anderen Stelle befindet.

Der bestrahlte Neutronenabsorberkörper kann also mit einem anderen Ende als im Bezugskernreaktor in den beladenen Kernreaktor eingefahren werden. Auch können Teile des bestrahlten Neutronenabsorberkörpers, die im Bezugskernreaktor durch Selbstabschirmung im Steuerelement z. B. nur einem verhältnismäßig geringen Fluß an thermischen Neutronen ausgesetzt waren, im wiederbeladenen Kernreaktor einem anderen, d. h. erhöhten Fluß thermischer Neutronen ausgesetzt sein, so daß im beladenen Kernreaktor der Ausbrand des Neutronengiftes im bestrahlten Neutronenabsorberkörper über dessen Länge und Querschnitt vergleichmäßigt wird. Diese Vergleichmäßigung bedeutet aber, daß das im bestrahlten Neutronenabsorberkörper enthaltene Neutronengift besser ausgenutzt wird und daß der erzielbare mittlere Ausbrand des Neutronengiftes im bestrahlten Neutronenabsorberkörper und damit dessen Standzeit im Kernreaktor erhöht werden können. Diese Erhöhung der Standzeit des Neutronenabsorberkörpers bedeutet aber, daß eine verringerte Anzahl zu entsorgender bestrahlter Neutronenabsorberkörper bzw. bestrahlter Steuerelemente anfällt.

Ein beim Durchführen des erfindungsgemäßen Verfahrens besonders leicht handhabbares Steuerelement ist vorteilhafterweise dadurch gekennzeichnet, daß ein Trägerkörper mit einem langgestreckten Zentralkörper vorgesehen ist, der an jedem Ende einen zum Zentralkörper rechtwinklig angeordneten Schenkel aufweist, und daß der Neutronenabsorberkörper plattenartig ausgebildet und mit jeweils einer Kante sowohl am Schenkel am einen Ende des Zentralkörpers als auch am Schenkel am anderen Ende des Zentralkörpers lösbar gehalten ist.

Besonders leicht handhabbar ist auch ein Steuerelement, das dadurch gekennzeichnet ist, daß ein Trägerkörper mit einem langgestreckten Zentralkörper vorgesehen ist und daß der Neutronenabsorberkörper plattenartig ausgebildet und mit einer Längskante am langgestreckten Zentralkörper lösbar gehalten ist.

Die Erfindung und ihre Vorteile seien anhand der Zeichnung an einem Ausführungsbeispiel näher erläutert.

Fig. 1 zeigt in perspektivischer Ansicht ein für ein erfindungsgemäßes Verfahren geeignetes Steuerelement eines Siedewasserkernreaktors.

Fig. 2 zeigt einen Querschnitt entsprechend der strichpunktierten Linie II-II in Fig. 1.

Fig. 3 zeigt einen Querschnitt entsprechend der strichpunktierten Linie III-III in Fig. 1.

Fig. 4 und 5 zeigen in Diagrammen Neutronengiftausbrände in einem bestrahlten Neutronenabsorberkörper eines Steuerelementes nach den Fig. 1 bis 3 aufgetragen über die Länge und die Breite dieses Neutronenabsorberkörpers.

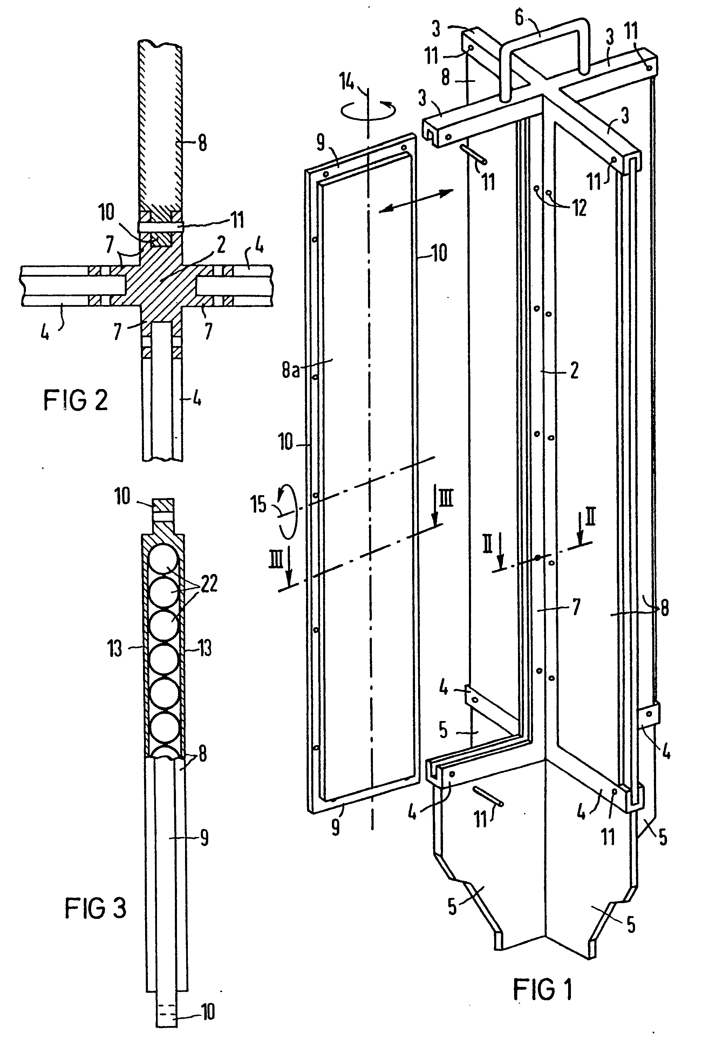

Das Steuerelement nach den Fig. 1 bis 3 weist einen Trägerkörper auf mit einem langgestreckten Zentralkörper 2, der an beiden Enden jeweils mit einem Tragkreuz versehen ist. Jedes dieser beiden Tragkreuze weist vier gleich lange Schenkel 3 und 4 auf. Die Schenkel 3 bzw. 4 an jedem Ende des Zentralkörpers 2 bilden miteinander einen Winkel von 90°. Ferner sind die Schenkel 3 und 4 rechtwinklig zum Zentralkörper 2 angeordnet. Die Schenkel 3 und 4 an beiden Enden des Zentralkörpers 2 sind schließlich paarweise zueinander parallel.

An den Schenkeln 4 des Tragkreuzes am vertikal unteren Ende des Zentralkörpers 2 des Steuerelementes nach den Fig. 1 bis 3 ist ein Kupplungskörper 5 angebracht, mit dem das Steuerelement mit einem nicht dargestellten Antriebskörper gekuppelt werden kann. An zwei miteinander fluchtenden Schenkeln 3 des Tragkreuzes am vertikal oberen Ende des Zentralkörpers 2 des Steuerelementes nach den Fig. 1 bis 3 ist ein Bügelgriff 6 für den Greifer einer Lademaschine angeordnet.

Wie insbesondere Fig. 2 zeigt, hat der Zentralkörper 2 einen quadratischen Querschnitt. Er weist an jeder Seite eine Halteschiene 7 für einen plattenförmigen Neutronenabsorberkörper 8 bzw. 8a auf. In ähnlicher Weise bilden die Schenkel 3 und 4 der Tragkreuze jeweils an der dem anderen Tragkreuz zugewandten Seite Halteschienen für die langgestreckten plattenförmigen Neutronenabsorberkörper 8 und 8a, die an allen ihren Kanten Flansche 9 und 10 aufweisen. Mit einem der Flansche 10, die sich an den beiden Längskanten des Neutronenabsorberkörpers 8 bzw. 8a befinden, greifen die Neutronenabsorberkörper 8 und 8a jeweils in eine der Schienen 7 am Zentralkörper 2, während jeder der beiden Flansche 9 an den Querkanten der Neutronenabsorberkörper 8 bzw. 8a in einen der als Schiene ausgebildeten Schenkel 3 und 4 der beiden Tragkreuze an den Enden der Trägerkörper 2 greift. An den Schienen 7 des Zentralkörpers 2 sowie an den als Schienen ausgebildeten Schenkeln 3 und 4 der Tragkreuze an den Enden des Zentralkörpers 2 sind die Neutronenabsorberkörper 8 und 8a mit Hilfe von Querstiften 11 und 12, die die Flanken der Schenkel 3 und 4 bzw. Schienen 7 und die jeweiligen Flansche 9 und 10 der Neutronenabsorberkörper 8 und 8a in entsprechenden Bohrungen durchgreifen, lösbar gehalten.

Wie Fig. 3 zeigt, kann ein plattenartiger Neutronenabsorberkörper 8 bzw. 8a mehrere dicht nebeneinanderliegende, zu den Längskanten des Neutronenabsorberkörpers 8 bzw. 8a parallele Längsrohre 22 enthalten, die außen mit einer Blechverkleidung 13 umhüllt sind. Diese Längsrohre 22 enthalten das Neutronengift, d. h. beispielsweise einvibriertes Bohrkarbidpulver ($B_4C$) als Füllung und sind an den beiden Enden verschlossen.

Das am nicht dargestellten Antriebskörper angebrachte Steuerelement nach den Fig. 1 bis 3 wird von unten vertikal in einen Siedewasserkernreaktor eingefahren. Dort greift es zwischen die einen quadratischen Querschnitt aufweisenden Hüllkästen von vier in den Ecken eines gedachten Quadrates angeordneten Kernreaktorbrennelementen, die zwischen ihren Hüllkästen einen Zwischenraum mit kreuzförmigen Querschnitt für das im Siedewasserkernreaktor vertikal anzuordnende Steuerelement bilden.

Zu Beginn eines Betriebszyklus des Siedewasserkernreaktors wird das Steuerelement verhältnismäßig tief in den Siedewasserkernreaktor eingefahren, um die dort vorhandene Überschußreaktivität zu kompensieren. Mit zunehmendem Abbrand des Kernbrennstoffes im Siedewasserkernreaktor wird das Steuerelement mit Hilfe des in der Zeichnung nicht dargestellten Antriebskörpers allmählich vertikal nach unten aus dem Siedewasserkernreaktor herausgezogen, da mit fortgeschrittenem Betrieb des Siedewasserkernreaktors die zu kompensierende Überschußreaktivität im Siedewasserkernreaktor abnimmt.

Während seiner Einsatzzeit im Siedewasserkernreaktor wird das Steuerelement nach den Fig. 1 bis 3 mindestens einmal mit Hilfe einer Lademaschine, die am Bügel 6 angreift, aus dem Siedewasserkernreaktor entladen und in einem mit Wasser gefüllten Becken abgesetzt. Dort werden die Stifte 11 und 12 aus den Schenkeln 3 und 4 sowie aus den Schienen 7 und damit auch aus den Flanschen 9 und 10 der Neutronenabsorberkörper 8 und 8a gelöst. Sodann werden, wie für den Neutronenabsorberkörper 8a in Fig. 1 näher dargestellt ist, die Neutronenabsorberkörper 8 und 8a aus den Schenkeln 3 und 4 sowie aus den Schienen 7 radial nach außen herausgezogen, um ihre Längsachse 14 um 180° gedreht, sodann um eine Querachse 15 zu den langgestreckten Neutronenabsorberkörpern 8 und 8a um 180° geschwenkt und schließlich wieder zwischen die Schenkel 3 und 4 und in die Schienen 7 am Zentralkörper 2 des Steuerlementes eingesetzt. Durch Wiedereinsetzen der Stifte 12 werden die Neutronenabsorberkörper 8 und 8a dort wieder lösbar gehalten. Sodann wird dieses zum Beladen bestimmte Steuerelement mit Hilfe der Lademaschine wieder in seine ursprüngliche Position in denselben, in diesem Falle als Bezugskernreaktor anzusehenden Siedewasserkernreaktor eingesetzt. Dort nehemen jetzt die langgestreckten Neutronenabsorberkörper 8 und 8a eine neue Position ein, die gegenüber der ursprünglichen Position um 180° um die Längsachse 14 gedreht und um 180° um die Querachse 15 geschwenkt ist.

Eine neue Position der langgestreckten Neutronenabsorberkörper 8 und 8a im Siedewasserkernreaktor nach dem Wiedereinsetzen des Steuerelementes kann z. B. auch erzielt werden, wenn beispielsweise die langgestreckten Neutronenabsorberkörpern 8 und 8a im Wasserbekken nach dem Herausziehen aus den Schenkeln 3 und 4 sowie aus den Schienen 7 wohl um die Querachse 15 um 180° geschwenkt, nicht aber um ihre Längsachsen 14 gedreht werden, sondern wenn statt dessen urpsrünglich an fluchtenden Schenkeln 3 und 4 gehaltere Neutronenabsorberkörper 8 und 8a miteinander am Zentralkörper 2 des Trägerkörpers des Steuerelementes vertauscht, d. h. jeweils an eine andere Stelle bezüglich dem Zentralkörper 2 des Trägerkörpers gebracht werden.

Bestrahlte Neutronenabsorberkörper 8 und 8a, die am Trägerkörper des zum Beladen bestimmten Steuerelementes nach dem Entfernen von ursprünglichen bestrahlten Neutronenabsorberkörpern 8 und 8a angeordnet werden, können auch aus einem anderen Steuerelement stammen, das aus demselben, in diesem Fall den Bezugskernreaktor darstellenden Siedewasserkernreaktor entladen wurde. Sie werden im zum Beladen bestimmten Steuerelement so angeordnet, daß sie sich nach dem Wiedereinsetzen dieses Steuerelementes in den Siedewasserkernreaktor gegenüber ihrer Ausgangsposition in diesem den Bezugskernreaktor darstellenden Siedewasserkernreaktor in einer um ihre Querachse 15 geschwenkten Position bzw. um die Längsachse 14 gedrehten Position bzw. bezüglich dem Trägerkörper des anderen bestrahlten Steuerelementes anderen Stelle befinden. Das andere Steuerelement, aus dem die Neutronenabsorberkörper 8 und 8a stammen, die in das zum Beladen bestimmte Steuerelement eingesetzt werden, kann auch aus einem anderen den Bezugskernreaktor darstellenden Siedewasserkernreaktor und nicht aus dem Siedewasserkernreaktor stammen, aus dem das zum Beladen bestimmte Steuerelement entladen wurde und in den dieses zum Beladen bestimmte Steuerelement nach dem Einbau der bestrahlten Neutronenabsorberkörper 8 und 8a auch wieder eingesetzt wird.

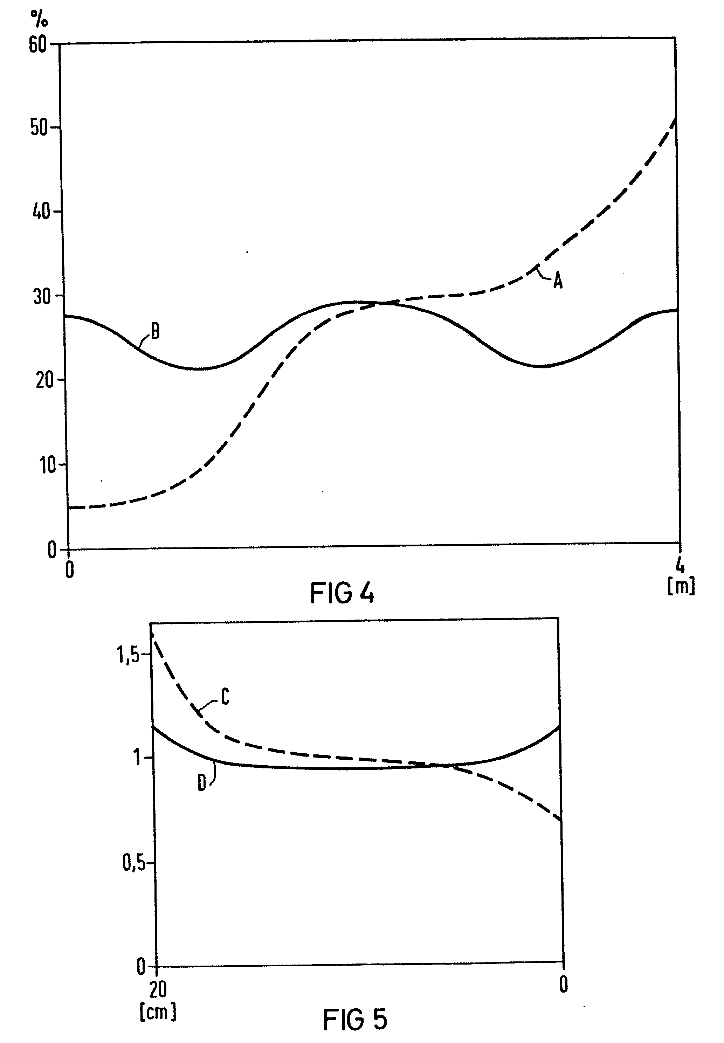

Im Diagramm nach Fig. 4 ist über der Länge eines bestrahlten 4 m langen Neutronenabsorberkörpers 8a der über die Breite des Neutronenabsorberkörpers gemittelte Ausbrand des Isotops Bor 10 des aus Borkarbid bestehenden Neutronengiftes in Prozent als Ordinate aufgetragen. Die gestrichelt dargestellte Kurve A stellt den gemittelten Ausbrand des Isotops Bor 10 im Neutronenabsorberkörper 8a dar, wenn dieser Neutronenabsorberkörper 8a während seiner gesamten Standzeit stets die gleiche Position im Siedewasserkernreaktor hat. Wie man erkennt, beträgt dieser gemittelte Ausbrand an dem am Kupplungskörper 5 angebrachten Ende (0 m) etwa 5% und steigt stetig an bis zu 50% am ständig im Siedewasserkernreaktor befindlichen Ende (4 m) , das von den Schenkeln 3 des Tragkreuzes mit dem Haltegriff 6 gehalten wird.

Demgegenüber stellt die durchgezogene Kurve B den gemittelten Ausbrand des Isotops Bor 10 nach derselben Standzeit im Siedewasserkernreaktor dar für den Fall, daß der Neutronenabsorberkörper 8a nach Ablauf der halben Standzeit um die Querachse 15 um 180° geschwenkt worden ist. Wie man erkennt, ergibt sich ein gemittelter maximaler Ausbrand von höchstens 29%. Da das Neutronengift im Falle B weit weniger durch Neutroneneinfang aufquillt als stellenweise im Falle A, die Hülsen der das Neutronengift enthaltenden Rohre 22 im Neutronenabsorberkörper 8a also weit weniger und viel gleichmäßiger mechanisch beansprucht werden als im Falle A, und da auch die Absorptionswirkung des Neutronengiftes im Falle B viel gleichmäßiger nachgelassen hat als im Falle A, kann ein Neutronenabsorberkörper 8a, der während seiner Standzeit im Siedewasserkernreaktor um die Querachse 15 um 180° geschwenkt wurde, sehr viel länger im Siedewasserkernreaktor verbleiben als ein Neutronenabsorberkörper 8a, der dort stets eine unveränderte Position hat.

In Fig. 5 ist über der Breite des 20 cm breiten Neutronenabsorberkörpers 8a als Abszisse der relative Ausbrand des das Neutronengift darstellenden Isotops Bor 10 als Ordinate aufgetragen. Die strichpunktierte Kurve C bezieht sich auf den Fall, daß der Neutronenabsorberkörper 8a während seiner gesamten Standzeit im Siedewasserkernreaktor nicht um seine Längsachse 14 gedreht wird, während die durchgezogene Kurve D dem Fall zugeordnet ist, daß dieser Neutronenabsorberkörper 8a nach Ablauf der halben Standzeit im Siedewasserkernreaktor um die Längsachse 14 um 180° gedreht worden ist. Wie erkennbar, beträgt im Fall C der relative Ausbrand an der am Zentralkörper 12 anliegenden Kante (Breite 0 cm) des Neutronenabsorberkörpers 8a etwa 0,7 und steigt stetig bis zu einem Wert von etwa 1,6 an der anderen Längskante (Breite 20 cm) des Neutronenabsorberkörpers 8a an. Im Fall D ist auch der relative Ausbrand über die Breite des Neutronenabsorberkörpers 8a ganz erheblich vergleichmäßigt, sein Maximalwert an beiden Längskanten beträgt nur etwa 1,1.

**Patentansprüche**

1. Verfahren zum Ent- und Beladen eines Kernreaktors, bei dem ein einen Trägerkörper mit einem langgestreckten Neutronenabsorberkörper aufweisendes, bestrahltes Steuerelement aus dem Kernreaktor entladen und anschließend ein zum Beladen bestimmtes Steuerelement wieder in den Kernreaktor eingesetzt wird, dadurch gekennzeichnet, daß ein bestrahlter Neutronenabsorberkörper (8a), der aus einem in einem Bezugskernreaktor bestrahlten Steuerelement stammt, verglichen mit seiner Ausgangsposition in diesem Bezugskernreaktor in eine um 180° um eine Querachse (15) geschwenkte Position und/oder in eine um eine Längsachse (14) gedrehte Position und/oder in eine bezüglich dem Trägerkörper dieses bestrahlten Steuerelementes aus dem Bezugskernreaktor andere Stelle im zum Beladen bestimmten Steuerelement gebracht und an dessen Trägerkörper angeordnet wird und daß dieses zum Beladen bestimmte Steuerelement derart in den Kernreaktor eingesetzt wird, daß sich dort der Neutronenabsorberkörper (8a) in der gegenüber seiner Ausgangsposition im Bezugskernreaktor um die Querachse (15) geschwenkten Position bzw. um die Längsachse (15) gedrehten Position bzw. bezüglich dem Trägerkörper des bestrahlten Steuerelementes aus dem Bezugskernreaktor anderen Stelle befindet.

2. Verfahren nach Anspruch 1, dadurch gekennzeichnet, daß der Neutronenabsorberkörper (8a) in eine um 180° um die Längsachse (14) gedrehte Position gebracht wird.

3. Verfahren nach Anspruch 1, dadurch gekennzeichnet, daß der Neutronenabsorberkörper (8a) aus dem bestrahlten Steuerelement stammt, das aus dem zugleich den Bezugskernreaktor darstellenden Kernreaktor entladen und als das zum Beladen bestimmtes Steuerelement wieder in den Kernreaktor eingesetzt wird.

4. Steuerelement insbesondere für ein Verfahren nach einem der Ansprüche 1 bis 3, dadurch gekennzeichnet, daß ein Trägerkörper mit einem langgestreckten Zentralkörper (2) vorgesehen ist, der an jedem Ende einen zum Zentralkörper (2) rechtwinklig angeordneten Schenkel (3) und (4) aufweist, und daß der Neutronenabsorberkörper (8a) plattenartig ausgebildet und mit jeweils einer Kante sowohl am Schenkel (3) am einen Ende des Zentralkörpers (2) als auch am Schenkel (4) am anderen Ende des Zentralkörpers (2) lösbar gehaltert ist.

5. Steuerelement insbesondere für ein Verfahren nach einem der Ansprüche 1 bis 3, dadurch gekennzeichnet, daß ein Trägerkörper mit einem langgestreckten Zentralkörper (2) vorgesehen ist und daß der Neutronenabsorberkörper (8a) plattenartig ausgebildet und mit einer Längskante am langgestreckten Zentralkörper (2) lösbar gehaltert ist.

**Claims**

1. Process for unloading and loading a nuclear reactor, according to which an irradiated control element, comprising a carrier body with a longitudinally extending neutron absorber body, is removed from the nuclear reactor and then a control element appointed for loading is replaced in the nuclear reactor, characterised in that an irradiated neutron absorber body (8a), which originates from a control element irradiated in a reference nuclear reactor, is moved, compared to its initial position in this reference nuclear reactor, into a position pivoted by 180° about a transverse axis (15) and/or a position turned about a longitudinal axis (14) and/or another place outside the reference nuclear reactor relative to the carrier body of this irradiated control element, in the control element appointed for loading, and is arranged on its carrier body, and in that this control element appointed for loading is inserted into the nuclear reactor in such a way that the neutron absorber body (8a) is in the position pivoted about the transverse axis (15) relative to its initial position in the reference nuclear reactor, or respectively the position turned about the longitudinal axis (14), or respectively the other place outside the reference nuclear reactor relative to the carrier body of the irradiated control element.

2. Process according to claim 1, characterised in that the neutron absorber body (8a) is moved into a position turned by 180° about the longitudinal axis (14).

3. Process according to claim 1, characterised in that the neutron absorber body (8a) originates from the irradiated control element, which is removed from the nuclear reactor simultaneously representing the reference nuclear reactor, and is re-inserted into the nuclear reactor as the control element appointed for loading.

4. Control element, particularly for a process according to one of the claims 1 to 3, characterised in that a carrier body is provided with a longitudinally extending central body (2), which comprises at each end an arm (3) and (4) arranged at right angles to the central body (2), and in that the neutron absorber body (8a) is of a plate-like design and is releasably supported by respective edge both to the arm (3) at one end of the central body (2) and to the arm (4) at the other end of the central body (2).

5. Control element, particularly for a process according to one of the claims 1 to 3, characterised in that a carrier body is provided with a longitudinally extending central body (2), and in that the neutron absorber body (8a) is of a plate-like design and is releasably supported by one longitudinal edge on the longitudinally extending central body (2).

**Revendications**

1. Procédé de chargement et de déchargement d'un réacteur nucléaire, qui consiste à décharger du réacteur nucléaire en élément de commande orradié et présentant un corps-support ayant un corps oblong d'absorbeur de neutrons et ensuite à réintroduire dans le réacteur nucléaire un élément de commande destiné à être chargé, caractérisé en ce qu'il consiste à mettre dans l'élément de commande destiné à être chargé et à disposer sur le corps-support de celui-ci, un corps irradié d'absorbeur de neutrons (8a), qui provient d'un élément de commande irradié dans un réacteur nucléaire de référence, dans une position qui, comparée à sa position de départ dans ce réacteur nucléaire de référence, s'obtient par un basculement à 180° autour d'un axe transversal (15) ou par une rotation autour d'un axe longitudinal (14) et/ou dans un autre emplacement par rapport au corps-support de cet élément de commande irradié provenant du réacteur nucléaire de référence, et à introduire cet élément de commande destiné à être chargé dans le réacteur nucléaire de manière à ce que le corps d'absorbeur de neutrons (8a) s'y trouve, par rapport à sa position de départ dans le réacteur nucléaire de référence, en la position obtenue par basculement autour de l'axe transversal (15) ou par rotation autour de l'axe longitudinal (14) ou en un autre emplacement, par rapport au corps-support de l'élément de commande irradié provenant du réacteur nucléaire de référence.

2. Procédé suivant la revendication 1, caractérisé en ce qu'il consiste à mettre le corps d'absorbeur de neutrons (8a) dans une position qui s'obtient par une rotation de 180° autour de l'axe longitudinal (14).

3. Procédé suivant la revendication 1, caractérisé en ce que le corps d'absorbeur de neutrons (8a) provient de l'élément de commande irradié, qui est déchargé du réacteur nucléaire représentant en même temps le réacteur nucléaire de référence, et qui est réintroduit dans le réacteur nucléaire en tant qu'élément de commande destiné à être chargé.

4. Elément de commande, notamment pour un procédé suivant l'une des revendications 1 à 3, caractérisé en ce qu'il est prévu un corps-support ayant un corps central (2) oblong qui présente à chaque extrémité une branche (3) et (4) disposée à angle droit par rapport au corps central (2) et en ce que le corps d'absorbeur de neutrons (8a) est agencé en forme de plaque et est maintenu de manière détachable par un bord tant sur la branche (3) à l'une des extrémités du corps central (2), que sur la branche (4) à l'autre extrémité du corps central (2).

5. Elément de commande, notamment pour un procédé suivant l'une des revendications 1 à 3, caractérisé en ce qu'il est prévu un corps-support ayant un corps central (2) oblong et en ce que le corps d'absorbeur de neutrons (8a) est agencé sous forme de plaque et et est maintenu de manière détachable sur le corps central oblong (2) par un bord longitudinal.

FIG 2

FIG 3

FIG 1

FIG 4

FIG 5